# EUROPEAN PATENT SPECIFICATION

(11) **EP 2 544 889 B1**
(45) Date of publication and mention of the grant of the patent: **12.08.2015**
(21) Application number: 11707059.9
(22) Date of filing: 01.03.2011
(51) Int. Cl.: B32B 7/06

(54) **RECONFIGURABLE MULTILAYER LAMINATES AND METHODS**
NEUKONFIGURIERBARE MEHRSCHICHTIGE LAMINATE UND VERFAHREN
STRATIFIÉS MULTICOUCHES RECONFIGURABLES ET PROCÉDÉS

(30) Priority: 09.03.2010 US 312052 P
(43) Date of publication of application: 16.01.2013
(73) Proprietor: Avery Dennison Corporation, Pasadena, CA 91103 (US)
(72) Inventor: HOLBERT, Victor, P., Newbury OH 44046 (US); PURDEF, Paul, L., Concord Twp OH 44095 (US); NEIMAN, Richard, A., Eastlake OH 44095 (US)
(74) Representative: Müller-Boré & Partner Patentanwälte PartG mbB
(86) International application number: PCT/US2011/026595
(87) International publication number: WO 2011/112387

(56) References cited:
- EP-A1- 0 529 840
- US-A- 3 993 815
- US-A- 5 807 623
- US-A1- 2004 247 837
- US-A1- 2009 258 225

## Description

The present invention relates to a multilayer laminate for receiving printed designs and/or text, which can be adhesively applied to a substrate or article of interest. The invention also relates to methods involving the laminate and applying the laminate to the substrate or article.

Typically, labels for a wide array of consumer products are formed by printing designs and/or text onto a multilayered laminate. The laminate can be die cut prior to or after printing into specific label shapes. Generally, such laminates include a paper or film liner layer, a paper or film face layer, and an adhesive layer disposed between the liner and the face layers. A release layer is typically included between the adhesive layer and the liner. Upon separating the liner layer from the adhesive layer, i.e. via the release layer, the exposed adhesive face enables the face layer to be readily applied and retained to a substrate or other receiving surface such as a consumer product or container.

Prior to application of the laminate or label die cut therefrom, to a substrate or receiving surface; decorative designs, logos, and/or text are typically printed upon an exposed surface of the face layer of the laminate. Depending upon the face material, characteristics of the printing inks, and other factors, one or more topcoats may be applied to the exposed face surface to promote retention and chemical stability of the printing ink.

After printing, it is frequently necessary to apply one or more additional layers onto the printed designs, logos, and/or text to reduce the potential for unintended transfer or removal of the printing composition from the face layer. These one or more additional layers can include an over-varnish or lacquer material.

Although these practices are widely used and provide an attractive, durable, and wear-resistant label, it would be desirable to provide a more economical strategy leading to a comparable high performance label.

The difficulties and drawbacks associated with previously known laminates and techniques are addressed in the present multilayer laminate and associated methods.

In one aspect, the present invention provides a reconfigurable multilayer laminate comprising a film layer having an outer face, a liner layer, and an adhesive layer disposed between the film layer and the liner layer, wherein the film layer includes a material selected from the group consisting of polyolefins, vinyl-based polymers, polyesters, polycarbonates, and combinations thereof, wherein the liner layer includes a material selected from the group consisting of paper, foil, film, and combinations thereof, and wherein the adhesive layer includes a material selected from the group consisting of solvent-based pressure sensitive adhesives, emulsion-based pressure sensitive adhesives, hot melt rubber based pressure sensitive adhesives, vinyl-based adhesives, polyurethane adhesives, UV hot melt acrylic adhesives, epoxy adhesives, and combinations thereof. The multilayer laminate also comprises a first release layer disposed between the film layer and the adhesive layer. And, the multilayer laminate comprises a second release layer disposed between the liner layer and the adhesive layer. The ratio of the release force of the first release layer to the release force of the second release layer is in the range of from 1:1.5 to about 1:100, wherein at least one of the first and second release layers is formed from a silicone or silicone-based material.

In yet another aspect, the present invention provides a method for reconfiguring a multilayer laminate. The method comprises providing the above reconfigurable multilayer laminate. The method also comprises separating the film layer and the first release layer from the adhesive layer to thereby expose a face of the adhesive layer. And, the method comprises re-orienting the film layer and the first release layer and contacting the outer face of the film layer with the exposed face of the adhesive layer to form a reconfigured laminate, whereby the first release layer is exposed.

In still another aspect, the present invention provides a method for forming a label. The method comprises providing the above reconfigurable multilayer laminate. The method further comprises forming at least one printed region on the outer face of the film layer. The method additionally comprises separating the film layer, the printed region(s), and the first release layer from the adhesive layer to thereby expose a face of the adhesive layer. And, the method also comprises re-orienting the film layer, the printed region(s), and the first release layer, and contacting at least one of the printed region(s) and the outer face of the film layer to the exposed face of the adhesive layer to thereby form a label, whereby the first release layer is exposed.

In another aspect, the present invention provides a system for producing a reconfigured multilayer laminate. The system comprises the above reconfigurable multilayer laminate. The system also comprises equipment for (i) forming at least one printed region on the outer face of the film, (ii) separating the film layer, the printed region(s), and the first release layer from the adhesive layer to thereby expose a face of the adhesive layer, and (iii) re-orienting the film layer, the printed region(s), and the first release layer and contacting at least one of the printed region(s) and the outer face of the film layer to the exposed face of the adhesive layer to thereby form a label, whereby the first release layer is exposed.

As will be realized, the invention is capable of other and different embodiments and its several details are capable of modifications in various respects, all without departing from the invention. Accordingly, the drawings and description are to be regarded as illustrative and not restrictive.
Figure 1 is a schematic cross sectional view illustrating various layers of a preferred embodiment multilayer laminate according to the present invention.
Figure 2 is a schematic diagram illustrating a preferred method for reconfiguring a preferred embodiment multilayer laminate in accordance with the invention.
Figure 3 is a schematic diagram illustrating a system for reconfiguring a preferred embodiment multilayer laminate in accordance with the invention.

The present invention relates to multilayer laminates and various methods involving the laminates as follows. The new multilayer laminate includes (i) a liner, (ii) an adhesive layer, and (iii) a film layer, in which the (ii) adhesive layer is positioned between the (i) liner and (iii) film layers. The laminate also includes a first release layer (a) between the (iii) film and (ii) adhesive layers, and a second release layer (b) between the (ii) adhesive and (i) liner layers. One or more topcoats or other agents may be applied to the exposed outer surface of the (iii) film layer.

The unique characteristics of the laminate allow a party such as a converter, to print desired markings or text onto an exposed outer surface of the (iii) film layer. The orientation of the printed markings or text is reversed from its intended final orientation. After printing, the laminate is then separated (or delaminated) along the interface of the first release layer (a). Upon separating the laminate along the first release layer (a), that release layer is carried with the (iii) film layer, to thereby expose a face of the (ii) adhesive layer. The separated portion of the laminate, i.e. the printed film layer (iii) and the first release layer (a) carried therewith, is then "flipped over" preferably by a turnbar assembly. The re-oriented laminate portion is then re-applied to the other laminate portion, i.e. the (i) liner, the second release layer (b), and the (ii) adhesive layer, such that the printed face of the (iii) film layer is contacted with the exposed face of the (ii) adhesive layer, thereby "sandwiching" or encapsulating the print between the (iii) film and (ii) adhesive layers. In the resulting reconfigured laminate, the first release layer (a) is now exposed. The printed markings or text, when viewed through the first release layer (a) and the (iii) film layer, now appear in their intended orientation and are not backwards.

The resulting laminate can then be applied to a substrate or article, by separating the (i) liner from the (ii) adhesive along the second release layer (b). Upon separating these layers, the second release layer (b) is carried with the (i) liner, thereby exposing a face of the (ii) adhesive layer. The exposed face of the (ii) adhesive layer then enables the remaining portion of the laminate (including the print) to be adhesively attached to the substrate or article of interest. As explained in greater detail herein, typically, prior to application of the laminate to the substrate or article of interest, the laminate is subjected to some type of die cutting process whereby one or more shaped labels are formed. A variety of methods known to those skilled in the art can be utilized to accomplish such.

A significant feature of the laminate is that the first and second release layers (a) and (b) respectively, have particular release properties. Specifically, the first release layer (a) is easier to release or separate than the second release layer (b). Ideally, the ratio between the amounts of force required to separate the first release layer as compared to the second release layer (b) is about 1:3. These aspects are all described in greater detail herein.

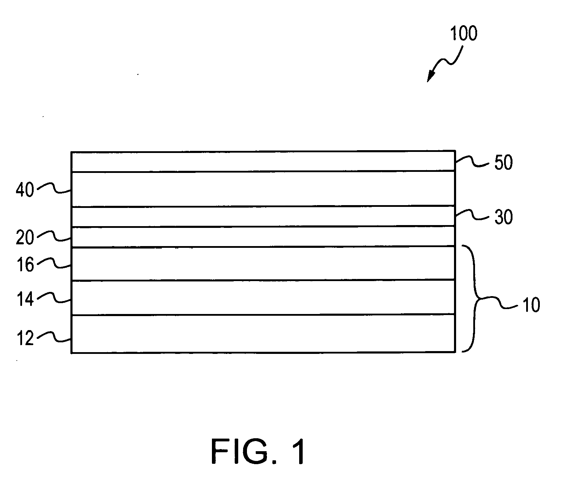

Figure 1 schematically illustrates a preferred embodiment laminate 100. The laminate 100 comprises a liner layer 10 which can be a multilayer liner including one or more structural layers such as layers 12 and 14. It will be understood that a single structural layer could be used. The laminate also comprises an adhesive layer 20. And the laminate 100 additionally comprises a film layer 40. The adhesive layer 20 is disposed between the liner 10 and the film layer 40. The laminate 100 also comprises a first release layer 30 disposed between the film layer 40 and the adhesive layer 20. And, the laminate 100 additionally comprises a second release layer 16 disposed between the adhesive layer 20 and the liner layer(s) 12 or 14. The multilayer laminate 100 may optionally further comprise one or more topcoat layers 50 disposed on the film layer 40. Each of these layers and materials suitable therefore, are described in greater detail as follows.

As noted, the liner layer 10 can be in the form of a single layer or as an assembly of multiple layers. A wide array of materials can be used for the liner layer including paper, foil, or film materials. Representative examples of suitable materials include, but are not limited to supercalendered kraft (SCK), coated kraft (CK), machine finished (MF), BG, polyethylene terephthalate (PET), PK, and combinations thereof. It will be understood that combinations of materials could be used for the liner.

The adhesive layer 20 typically includes one or more pressure sensitive adhesives. Specific examples include solvent, emulsion and/or hot melt acrylic or rubber based pressure sensitive adhesives. Other types of adhesives could be used such as vinyl-based adhesives, UV hot melt acrylic adhesives, polyurethane adhesives and epoxy adhesives.

In certain embodiments, one or more pigmented adhesives can be used in the multilayer laminates. Pigmented adhesives can be incorporated in the laminates to improve opacity of the finished laminate. When producing certain labels, increased opacity is an important characteristic. Typical pigment loading levels range from about 5% to about 60% or more, and preferably from about 10% to about 25%. These percentages are weight percentages and based upon the weight of the adhesive prior to application. Increasing opacity of an adhesive is generally accomplished by incorporating one or more pigments in the adhesive. Nearly any type of opacifying agent can be used such as titanium dioxide, calcium carbonate, microspheres of opacifying agents, and a wide range of organic pigments. In addition to or instead of any of these opacifiers, it is also contemplated that one or more metallic pigments could be utilized such as but not limited to aluminum, silver and/or other metals.

The film layer 40 can also utilize a wide range of materials including various polyolefin films such as polyethylene (PE) and polypropylene (PP), various vinyl-based polymers, polyesters such as polyethylene terephthlate (PET), and polycarbonates (PC).

The first and second release layers 30 and 16, respectively, can be formed from a wide range of release materials known in the art such as for example silicones and silicone-based materials. The predominant materials used for release layers are silicone formulations. Numerous silicone release coating materials are known based upon polysiloxanes. Formulation, design, and application of these materials in laminates and labeling systems are described in numerous patents by the present Assignee including: US Patents 5,728,469; 5,543,231; 5,562,992; 5,494,945; 5,654,093; 6,423,406; 5,084,317; 6,235,363 and 5,843,549. It is contemplated that one of the release layers could be free of silicones and/or polysiloxanes. The present invention includes the use of nearly any release material.

The first and second release layers exhibit a particular release force. The release force is the amount of force necessary to separate the release layer from an immediately adjacent layer. This force varies upon a variety of factors including the release material, the material of the adjacent layer, the surface characteristics of these layers, the thickness of the layers, uniformity of the release layer, and physical and chemical interactions between the release material and that of the adjacent layer.

As is known by those skilled in the art, the force necessary to achieve release between two faces or layers, i.e. the release force, is typically measured by a TLMI release tester. A wide variety of instruments are commercially available for measuring TLMI release properties, such as AR-1000 adhesion/release tester available from Ichemco S.R.L. of Italy.

As noted, it is preferred that the ratio of the release force of the first release layer 30 to the release force of the second release layer 16 is preferably about 1:3. However, the invention includes ratios as low as 1:1.5. It is believed that there is no upper limit for this ratio so long as the liner layer 10 can still be separated from the adhesive layer 20. For purposes of quantifying a suitable range for the ratio, an upper limit of 1:100 is contemplated. Thus, the invention includes ratios of the release force of the first release layer to the release force of the second release layer of from 1:1.5 to 1:100.

Top coat materials are well known in the art. A wide range of such materials are commercially available such as from the present Assignee; BASF Resins; and Trebnick of Springboro, OH. The present invention includes the use of nearly any top coat material or combination of materials.

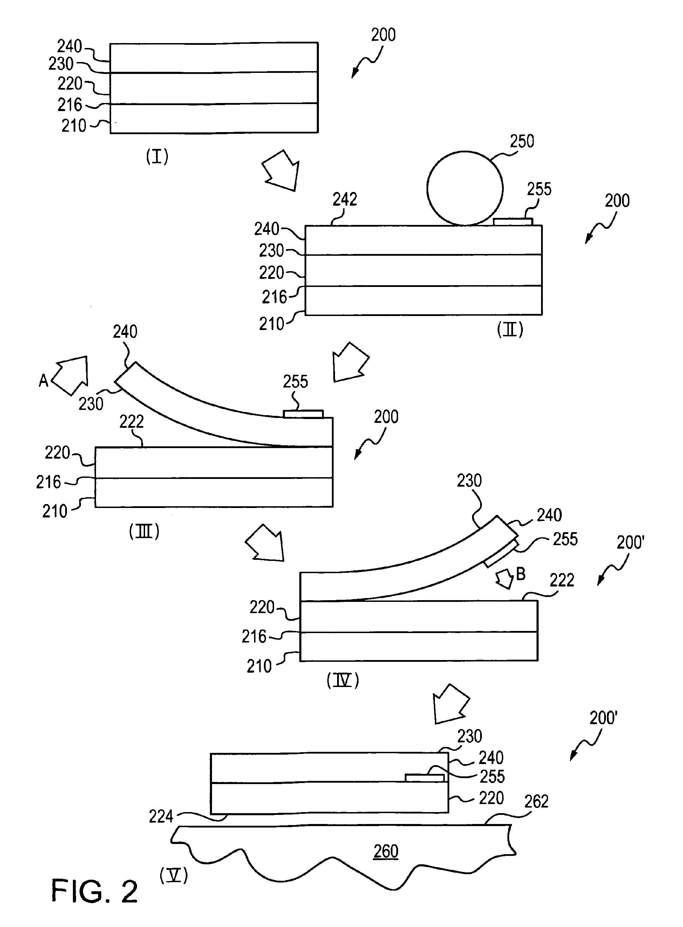

Figure 2 schematically illustrates a preferred embodiment multilayer laminate 200 undergoing a preferred reconfiguration process in accordance with the invention. The preferred embodiment laminate 200 comprises a liner 210, an adhesive layer 220, a film layer 240, a first release layer 230 disposed between the film layer 240 and the adhesive layer 220, and a second release layer 216 disposed between the liner 210 and the adhesive layer 220. The preferred reconfiguration process involves providing or otherwise obtaining a laminate such as the multilayered laminate 200. This is shown in Figure 2 as operation (I). The invention is not limited to the particular laminate 200. Instead, other laminates such as the multilayer laminate 100 described in conjunction with Figure 1 could be used.

Although not a required operation associated with reconfiguration of the laminate 200, generally a printing operation is performed such as shown in operation (II). A typical printing operation can be performed whereby one or more designs, logos, and/or text, schematically depicted as printed region 255 are applied onto an exposed outer face 242 of the film 240. Application of a printing composition such as an ink or other printing composition can be performed by one or more printing rollers 250 as known in the art. Other printing or marking techniques can be used such as spraying or the like. For example, the printed region(s) 255 can be applied by a wide array of printing technologies. A digital printing press utilizing offset liquid toner technology such as Indigo Printing available from Hewlett Packard can be used. Examples of other printing technologies that could be used include, but are not limited to thermal transfer, flexography, screen printing, offset printing, inkjet printing, and combinations of these technologies. Moreover, it will be appreciated that prior to printing or otherwise depositing the printing composition onto the face 242 of the film 240, one or more topcoats may be applied onto the face 242.

The reconfiguration process comprises an operation of separating and removing the film layer 240 and the first release layer 230 from the remaining portion of the laminate, i.e. the adhesive layer 220, the second release layer 216, and the liner 210. This operation is schematically depicted in Figure 2 as operation (III). In this operation, the film layer 240 is separated along the interface between the first release layer 230 and the adhesive layer 220. Removal of the film layer 240 and the first release layer 230 exposes a face 222 of the adhesive layer 220. As the film layer 240 is displaced from the remaining layers of the laminate, generally in the direction of arrow A in Figure 2, the first release layer 230 and the printed region(s) 255 are carried with the film layer 240.

The reconfiguration process continues and then re-orientates or "flips" the film layer 240 and re-attaches that layer to the exposed face 222 of the adhesive layer 220. In this operation, schematically depicted as (IV) in Figure 2, the re-oriented film layer 240 is brought into contact with the exposed face 222 of the adhesive layer 220, and generally in the direction of arrow B. As a result of the re-orientation of the film layer 240, the printed region(s) 255 are also contacted with the face 222 of the adhesive layer 220. And, as a further consequence of the film layer 240 being re-oriented, the first release layer 230 is now exposed as shown in operation (IV) of Figure 2.

After reconfiguration of the laminate, generally designated as reconfigured laminate 200', the printed regions 255 are now disposed between the film layer 240 and the adhesive layer 220. This arrangement serves to encapsulate and protect the printing composition and the integrity of the printed region(s) 255.

Although not a necessary operation of the laminate reconfiguration, Figure 2 schematically depicts an operation (V) in which the liner 210 and the second release layer 216 are removed to thereby expose another face 224 of the adhesive layer 220. Upon such exposure, the reconfigured laminate can be readily attached to a receiving surface 262 of a substrate 260 such as a container or the like.

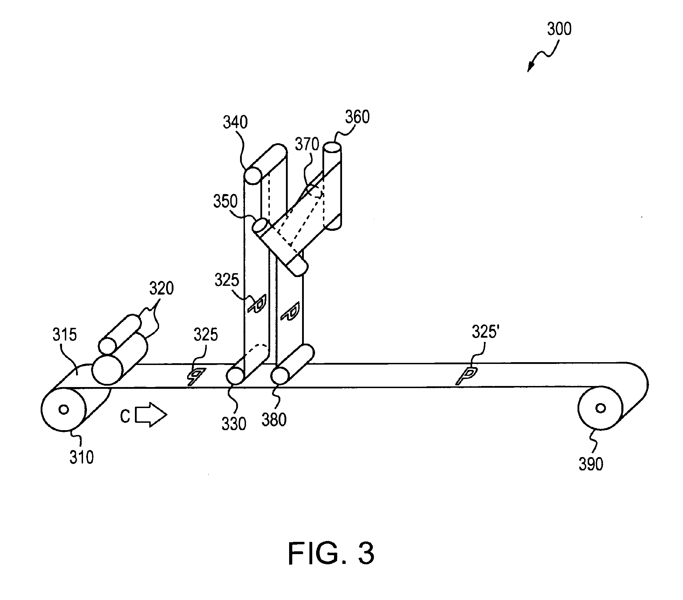

Figure 3 schematically illustrates a preferred embodiment system 300 for performing a printing and a reconfiguration process using a preferred embodiment laminate as described herein. Generally, a preferred laminate as described herein is provided in roll form, denoted as 310. Generally, any multilayer laminate such as laminates 100 and 200 for example could be utilized. A section of the laminate 310 is brought to one or more printing rollers 320 for deposition of a print region 325 on a film layer 315 of the laminate. It will be understood that the film layer 315 may contain one or more topcoats applied thereon. It will also be appreciated that printing is performed such that the deposited regions 325 are deposited backwards as compared to their ultimate intended orientation, shown in Figure 3 as 325'. This operation generally corresponds to the previously described operation (II) in Figure 2. The laminate is displaced from the roll 310 generally in the direction of arrow C shown in Figure 3. The laminate is then directed to a turnbar assembly generally denoted as a plurality of rollers 330, 340, 350, 360, 370, 380, preferably arranged as schematically illustrated in Figure 3.

Specifically, upon the laminate arriving at roller 330, the film layer and a corresponding release layer are separated from the remaining portion of the laminate, as in operation (III) depicted in Figure 2.

The film layer, release layer, and printed region 325 carried on the film layer, are brought to another roller 340 and then successively brought to rollers 350, 360, 370, and 380, which collectively re-orient or "flip" this portion of the laminate and return the laminate portion to the remaining laminate portion as described in conjunction with operation (IV) in Figure 2.

Equipment and systems for re-orienting or flipping the laminate portion are well known in the art. Turnbar assemblies are commonly used in conjunction with presses to flip a material layer over for two-sided printing. As noted, conventional turnbar assemblies can be used. Turnbar equipment and systems are commercially available such as from Belmark Industries of India; DMS Inc. of Lake Zurich, IL; and AAA Press Int., Inc. of Arlington Heights, IL.

Upon re-attaching the film layer to its corresponding laminate portion at roller 380, the printed region 325' is oriented in its ultimate intended state. The reconfigured laminate can then be subjected to an application operation such as operation (V) described in conjunction with Figure 2, or can be placed in a form suitable for storage or shipping such as a roll 390.

When rolling or winding the various preferred multilayer laminates as described herein, it may be desirable to roughen, appropriately texture, and/or coat the exposed outer face of the liner. When forming rolls of laminates having outer liner faces that are relatively smooth and/or exhibit low friction characteristics, a tendency for the wound roll to uncoil or "telescope" may occur. In order to avoid this, the outer surface of the liner can be treated or appropriate materials selected therefor to impart greater friction to adjacent layers when wound and thereby minimize uncoiling. Alternatively or in addition to texturing of the exposed outer face of the liner, it is contemplated that a surface treatment process could be performed on the exposed outer face of the liner. This process would be performed after "flipping" or reconfiguration of the laminate. Examples of such surface treatment processes include, but are not limited to, corona treatment, flame treatment, plasma treatment, or the like to remove most to substantially all of the release material, e.g. silicone, from the exposed outer face of the post-flip laminate.

It will be appreciated that the laminates described herein, after printing, flipping of the film layer, and re-attachment of the flipped portion of the laminate, are then typically subjected to one or more die cut operations. The reconfigured laminate is generally in a sheet or web form. Labels having a particular size and/or shape can be readily formed by die cutting the sheet or web. Die cutting techniques and equipment are well known in the art and described in numerous patents of the present Assignee: US Patents 5,520,760; 4,130,042; 4,372,681; 4,150,183; 5,585,193; 6,099,927; and 6,689,238 for example.

Use of the present invention provides numerous advantages. For example, use of the reconfigurable laminates leads to significant material savings because one or more additional layer material(s) are not needed. As will be recalled, these material(s) are typically applied over or onto the printed designs or text.

Elimination of one or more additional layer materials results in processes that are more environmentally friendly. In addition, eliminating storage and recovery of such materials provides further cost savings.

In addition, the operations of printing, de-lamination, re-orientation (or flipping), and re-lamination, and potentially also applying the reconfigured laminate to a substrate or article, can all be performed in one continuous process.

Furthermore, the present invention reduces shelf-keeping units (SKUs) and simplifies process complexity for parties such as converters who print labels or laminates.

Yet another advantage relates to the reconfigured laminate after re-orientation (or flipping). After such operation, typically an outer face of the laminate will be provided by a release layer. Thus, depending upon the material of the release layer, the outer surface of the laminate will exhibit one or more particular properties or characteristics. For example, if the release layer includes a silicone material, the provision of silicone layer along the laminate outer surface could provide one or more unique or beneficial properties. Providing a silicone outer surface can provide stain resistance properties to the laminate for example. It is also contemplated that a silicone-free release layer could be used. Moreover, agents and other additives could be incorporated into the release layer to impart or provide desired functionality to the outer face of a re-oriented (or flipped) laminate.

The present invention and the various preferred embodiments are particularly well suited for use in conjunction with digital technology such as digital printing press equipment. The preferred embodiments enable incorporating static print and variable print in a label or laminate assembly.

Many other benefits will no doubt become apparent from future application and development of this technology.

It will be understood that any one or more feature or component of one embodiment described herein can be combined with one or more other features or components of another embodiment. Thus, the present invention includes any and all combinations of components or features of the embodiments described herein.

## Claims

1. A reconfigurable multilayer laminate comprising:
a film layer having an outer face;
a liner layer;
an adhesive layer disposed between the film layer and the liner layer;
a first release layer disposed between the film layer and the adhesive layer; and
a second release layer disposed between the liner layer and the adhesive layer;
wherein the ratio of the release force of the first release layer to the release force of the second release layer is in the range of from 1:1.5 to 1:100,
wherein at least one of the first and second release layers is formed from a silicone or silicone-based material,
wherein the film layer includes a material selected from the group consisting of polyolefins, vinyl-based polymers, polyesters, polycarbonates, and combinations thereof,
wherein the liner layer includes a material selected from the group consisting of paper, foil, film, and combinations thereof, and
wherein the adhesive layer includes a material selected from the group consisting of solvent-based pressure sensitive adhesives, emulsion-based pressure sensitive adhesives, hot melt rubber based pressure sensitive adhesives, vinyl-based adhesives, polyurethane adhesives, UV hot melt acrylic adhesives, epoxy adhesives, and combinations thereof.

2. The reconfigurable laminate of claim 1 wherein the ratio is 1:3.

3. The reconfigurable laminate of claims 1-2 wherein the film layer is polyethylene terephthalate (PET).

4. The reconfigurable laminate of claims 1-3 wherein the adhesive layer is a pressure sensitive adhesive.

5. The reconfigurable laminate of claims 1-4 wherein the first release layer includes a polysiloxane.

6. The reconfigurable laminate of claims 1-5 wherein the second release layer includes a polysiloxane.

7. The reconfigurable laminate of claims 1-6 further comprising:
a topcoat disposed on the film layer.

8. The reconfigurable laminate of claims 1-7 further comprising:
a printed region on the outer face of the film layer.

9. The reconfigurable laminate of claims 1-8 wherein the adhesive includes at least one opacifying agent.

10. The reconfigurable laminate of claims 1-8 wherein the adhesive includes at least one pigment.

11. The reconfigurable laminate of claim 10 wherein the adhesive includes from 5% to 60% by weight of the at least one pigment.

12. A method for reconfiguring a multilayer laminate, the method comprising:
providing the reconfigurable multilayer laminate of claim 1;
separating the film layer and the first release layer from the adhesive layer to thereby expose a face of the adhesive layer; and
re-orienting the film layer and the first release layer and contacting the outer face of the film layer with the exposed face of the adhesive layer to form a reconfigured laminate, whereby the first release layer is exposed.

13. The method of claim 12 further comprising:
prior to separating the film layer and the first release layer from the adhesive layer, printing at least one printed region on the outer face of the film layer.

14. The method of claims 12-13, wherein after re-orienting the film layer and printed region(s) thereon, the printed region(s) are disposed between the film layer and the adhesive layer.

15. The method of claims 12-14, wherein after re-orienting the film layer and printed region(s) thereon, the printed region(s) are encapsulated within the laminate.

16. The reconfigured laminate formed by the method of claims 12-15.

17. A method for forming a label, the method comprising:
providing the reconfigurable multilayer laminate of claim 1;
forming at least one printed region on the outer face of the film layer;
separating the film layer, the printed region(s), and the first release layer from the adhesive layer to thereby expose a face of the adhesive layer;
re-orienting the film layer, the printed region(s), and the first release layer, and contacting at least one of the printed region(s) and the outer face of the film layer to the exposed face of the adhesive layer to thereby form a label, whereby the first release layer is exposed.

18. The method of claim 17 wherein after re-orienting the film layer and the printed region(s) thereon, the printed region(s) are encapsulated within the laminate.

19. The label formed by the method of claims 17-18.

20. A system for producing a reconfigured multilayer laminate, the system comprising:
the reconfigurable multilayer laminate of claim 1;
equipment for (i) forming at least one printed region on the outer face of the film, (ii) separating the film layer, the printed region(s), and the first release layer from the adhesive layer to thereby expose a face of the adhesive layer, and (iii) re-orienting the film layer, the printed region(s), and the first release layer and contacting at least one of the printed region(s) and the outer face of the film layer to the exposed face of the adhesive layer to thereby form a label, whereby the first release layer is exposed.

## Patentansprüche

1. Wiederkonfigurierbares Multischichtlaminat, umfassend:
eine Filmschicht mit einer äußeren Fläche,
eine Decklagenschicht,
eine Haftmittelschicht, angeordnet zwischen der Filmschicht und der Decklagenschicht,
eine erste Trennschicht, angeordnet zwischen der Filmschicht und der Haftmittelschicht, und eine zweite Trennschicht, angeordnet zwischen der Decklagenschicht und der Haftmittelschicht,
wobei das Verhältnis der Trennkraft der ersten Trennschicht zu der Trennkraft der zweiten Trennschicht in dem Bereich von 1:1,5 bis 1:100 liegt,
wobei mindestens eine der ersten und zweiten Trennschicht aus einem Silikon oder Material auf Silikon-Basis gebildet ist,
wobei die Filmschicht ein Material einschließt, ausgewählt aus der Gruppe, bestehend aus Polyolefinen, Polymeren aus Vinyl-Basis, Polyestern, Polycarbonaten und Kombinationen davon,
wobei die Decklagenschicht ein Material einschließt, ausgewählt aus der Gruppe, bestehend aus Papier, Folie, Film und Kombinationen davon, und
wobei die Haftmittelschicht ein Material einschließt, ausgewählt aus der Gruppe, bestehend aus Haftklebern auf Lösungsmittel-Basis, Haftklebern auf Emulsionsbasis, Haftklebern auf Heißschmelzkautschuk-Basis, Haftmitteln auf Vinyl-Basis, Polyurethanhaftmitteln, UV-Heißschmelzacrylhaftmitteln, Epoxyhaftmitteln und Kombinationen davon.

2. Wiederkonfigurierbares Laminat gemäß Anspruch 1, wobei das Verhältnis 1:3 ist.

3. Wiederkonfigurierbares Laminat gemäß den Ansprüchen 1 - 2, wobei die Filmschicht Polyethylenterephthalat (PET) ist.

4. Wiederkonfigurierbares Laminat gemäß den Ansprüchen 1 - 3, wobei die Haftmittelschicht ein Haftkleber ist.

5. Wiederkonfigurierbares Laminat gemäß den Ansprüchen 1 - 4, wobei die erste Trennschicht ein Polysiloxan einschließt.

6. Wiederkonfigurierbares Laminat gemäß den Ansprüchen 1 - 5, wobei die zweite Trennschicht ein Polysiloxan einschließt.

7. Wiederkonfigurierbares Laminat gemäß den Ansprüchen 1 - 6, weiter umfassend:
einen Topcoat bzw. Decklack, angeordnet auf der Filmschicht.

8. Wiederkonfigurierbares Laminat gemäß den Ansprüchen 1 - 7, weiter umfassend:
einen gedruckten Bereich auf der äußeren Fläche der Filmschicht.

9. Wiederkonfigurierbares Laminat gemäß den Ansprüchen 1 - 8, wobei das Haftmittel mindestens ein opazifizierendes Mittel einschließt.

10. Wiederkonfigurierbares Laminat gemäß den Ansprüchen 1 - 8, wobei das Haftmittel mindestens ein Pigment einschließt.

11. Wiederkonfigurierbares Laminat gemäß Anspruch 10, wobei das Haftmittel von 5 bis 60 Gew.-% des mindestens einen Pigments einschließt.

12. Verfahren zum Wiederkonfigurieren eines Mehrschichtlaminats, wobei das Verfahren umfaßt:
das Bereitstellen des wiederkonfigurierbaren Mehrschichtlaminats gemäß Anspruch 1,
das Abtrennen der Filmschicht und der ersten Trennschicht von der Haftmittelschicht, um dadurch eine Fläche der Haftmittelschicht freizulegen, und
das Reorientieren der Filmschicht und der ersten Trennschicht und das Inkontaktbringen der äußeren Fläche der Filmschicht mit der ausgesetzten Fläche der Haftmittelschicht unter Bildung eines wiederkonfigurierten Laminats, wodurch die erste Trennschicht ausgesetzt wird.

13. Verfahren gemäß Anspruch 12, weiter umfassend:
vor dem Abtrennen der Filmschicht und der ersten Trennschicht von der Haftmittelschicht das Bedrucken mindestens eines bedruckten Bereichs auf der äußeren Fläche der Filmschicht.

14. Verfahren gemäß den Ansprüchen 12 - 13, wobei nach dem Reorientieren der Filmschicht und der gedruckten Bereich(e) darauf die bedruckten Bereich(e) zwischen der Filmschicht und der Haftmittelschicht angeordnet werden.

15. Verfahren gemäß den Ansprüchen 12 - 14, wobei nach dem Reorientieren der Filmschicht und den gedruckten Bereich(en) darauf die bedruckten Bereiche in dem Laminat eingekapselt werden.

16. Wiederkonfiguriertes Laminat, gebildet durch das Verfahren gemäß den Ansprüchen 12 - 15.

17. Verfahren zum Bilden eines Etiketts, wobei das Verfahren umfaßt:
das Bereitstellen des wiederkonfigurierbaren Mehrschichtlaminats gemäß Anspruch 1,
das Bilden mindestens eines bedruckten Bereichs auf der äußeren Fläche der Filmschicht,
das Abtrennen der Filmschicht, der bedruckten Bereich(e) und der ersten Trennschicht von der Haftmittelschicht, um dadurch eine Fläche der Haftmittelschicht freizulegen,
das Reorientieren der Filmschicht, der bedruckten Bereich(e) und der ersten Trennschicht und das Inkontaktbringen mindestens eines von den bedruckten Bereiche(n) und der äußeren Fläche der Filmschicht an die freigelegte bzw.
ausgesetzte Fläche der Haftmittelschicht, um dadurch ein Etikett zu bilden, wobei die erste Trennschicht ausgesetzt wird.

18. Verfahren gemäß Anspruch 17, wobei nach dem Reorientieren der Filmschicht und der bedruckten Bereich(e) darauf die bedruckten Bereich(e) in dem Laminat eingekapselt werden.

19. Etikett, gebildet durch das Verfahren gemäß den Ansprüchen 17 - 18.

20. System zum Erzeugen eines wiederkonfigurierten Mehrschichtlaminats, wobei das System umfaßt:
das wiederkonfigurierbare Mehrschichtlaminat gemäß Anspruch 1;
Ausstattung zum (i) Bilden mindestens eines bedruckten Bereichs auf der äußeren Fläche des Films, (ii) des Abtrennens der Filmschicht, der bedruckten Bereich(e) und der ersten Trennschicht von der Haftmittelschicht, um dadurch eine Fläche der Haftmittelschicht freizulegen bzw. auszusetzen, und (iii) das Reorientieren der Filmschicht, der bedruckten Bereich(e) und der ersten Trennschicht und das Inkontaktbringen mindestens eines von den bedruckten Bereiche(n) und der äußeren Fläche der Filmschicht an die ausgesetzte Fläche der Haftmittelschicht, um dadurch ein Etikett zu bilden, wobei die erste Trennschicht ausgesetzt wird bzw. freigelegt wird.

## Revendications

1. Stratifié multicouche reconfigurable, comprenant :
une couche de film ayant une face extérieure ;
une couche de revêtement ;
une couche adhésive disposée entre la couche de film et la couche de revêtement ;
une première couche de détachement disposée entre la couche de film et la couche adhésive, et
une deuxième couche de détachement disposée entre la couche de revêtement et la couche adhésive ;
où le rapport de la force de détachement de la première couche de détachement à la force de détachement de la deuxième couche de détachement se situe dans l'intervalle allant de 1:1,5 à 1:100,
où au moins l'une de la première et la deuxième couche de détachement est formée à partir d'une silicone ou d'un matériau à base de silicone,
où la couche de film inclus un matériau choisi parmi le groupe consistant en des polyoléfines, des polymères à base de vinyle, des polyesters, des polycarbonates et leurs combinaisons,
où la couche de revêtement comprend un matériau choisi parmi le groupe consistant en le papier, une feuille, un film et leurs combinaisons, et
où la couche adhésive comprend un matériau choisi parmi le groupe consistant en des autoadhésifs à base de solvant, des autoadhésifs à base d'émulsion, des autoadhésifs à base de caoutchouc thermofusible, des adhésifs à base de vinyle, des adhésifs de type polyuréthanne, des adhésifs acryliques U.V. thermofusibles, des adhésifs époxy, et leurs combinaisons.

2. Stratifié reconfigurable selon la revendication 1, où le rapport se situe à 1:3.

3. Stratifié reconfigurable selon les revendications 1-2, où la couche de film est du poly(téréphtalate d'éthylène) (PET).

4. Stratifié reconfigurable selon les revendications 1-3, où la couche adhésive est un autoadhésif.

5. Stratifié reconfigurable selon les revendications 1-4, où la première couche de détachement comprend un polysiloxane.

6. Stratifié reconfigurable selon les revendications 1-5, où la deuxième couche de détachement contient un polysiloxane.

7. Stratifié reconfigurable selon les revendications 1-6, comprenant en outre :
une couche de finition disposée sur la couche de film.

8. Stratifié reconfigurable selon les revendications 1-7, comprenant en outre :
une région imprimée sur la face extérieure de la couche de film.

9. Stratifié reconfigurable selon les revendications 1-8, où l'adhésif comprend au moins un agent opacifiant.

10. Stratifié reconfigurable selon les revendications 1-8, où l'adhésif comprend au moins un pigment.

11. Stratifié reconfigurable selon la revendication 10, où l'adhésif comprend 5% à 60% en poids d'au moins un pigment.

12. Procédé pour reconfigurer un stratifié multicouche, le procédé comprenant :
la disposition du stratifié multicouche reconfigurable selon la revendication 1 ;
la séparation de la couche de film et la première couche de détachement de la couche adhésive pour ainsi exposer une face de la couche adhésive, et
la réorientation de la couche de film et la première couche de détachement et la mise en contact de la face extérieure de la couche de film avec la face exposée de la couche adhésive pour former un stratifié reconfiguré, ce par quoi la première couche de détachement est exposée.

13. Procédé selon la revendication 12, comprenant :
avant la séparation de la couche de film et de la première couche de détachement de la couche adhésive, imprimer au moins une région imprimée sur la face extérieure de la couche de film.

14. Procédé selon les revendications 12-13, où après réorientation de la couche de film et de la ou des régions imprimées sur celle-ci, la ou les régions imprimées sont disposées entre la couche de film et la couche adhésive.

15. Procédé selon les revendications 12-14, où après réorientation de la couche de film et de la ou des régions imprimées sur celle-ci, la ou les régions imprimées sont incorporées dans le stratifié.

16. Stratifié reconfiguré formé par le procédé des revendications 12-15.

17. Procédé de formation d'une étiquette, le procédé comprenant :
la disposition du stratifié multicouche reconfigurable selon la revendication 1 ;
la formation d'au moins une région imprimée sur la face extérieure de la couche de film ;
la séparation de la couche de film, la ou les régions imprimées et la première couche de détachement de la couche adhésive pour ainsi exposer une face de la couche adhésive, et
la réorientation de la couche de film, la ou les régions imprimées et la première couche de détachement et la mise en contact de la au moins une des régions imprimées et la face extérieure de la couche de film avec la face exposée de la couche adhésive pour former une étiquette, ce par quoi la première couche de détachement est exposée.

18. Procédé selon la revendication 17, où après la réorientation de la couche de film et la ou les régions imprimées sur celle-ci, la ou les régions imprimées sont incorporées dans le stratifié.

19. Etiquette formée par le procédé des revendications 17-18.

20. Système pour produire un stratifié multicouche reconfiguré, le système comprenant :
le stratifié multicouche reconfigurable selon la revendication 1 ;
l'équipement pour (i) former au moins une région imprimée sur la face extérieure de la couche de film, (ii) séparer la couche de film, la ou les régions imprimées et la première couche de détachement de la couche adhésive pour ainsi exposer une face de la couche adhésive, et (iii) réorienter la couche de film, la ou les régions imprimées et la première couche de détachement et la mise en contact d'au moins une des régions imprimées et de la face extérieure de la couche de film avec la face exposée de la couche adhésive pour former une étiquette, ce par quoi la première couche de détachement est exposée.
